# EUROPÄISCHE PATENTSCHRIFT

(11) **EP 3 362 226 B1**
(45) Veröffentlichungstag und Bekanntmachung des Hinweises auf die Patenterteilung: **08.09.2021**
(21) Anmeldenummer: 16781779.0
(22) Anmeldetag: 14.10.2016
(51) Int. Cl.: B25B 23/14, B25B 23/147, B25F 5/00

(54) **HANDWERKZEUGMASCHINE**
HAND-HELD POWER TOOL
MACHINE-OUTIL PORTATIVE

(30) Priorität: 15.10.2015 DE 102015220041; 13.10.2016 DE 102016220001
(43) Veröffentlichungstag der Anmeldung: 22.08.2018
(73) Patentinhaber: Robert Bosch GmbH, 70442 Stuttgart (DE)
(72) Erfinder: HECHT, Joachim, 71106 Magstadt (DE); HOPP, Michael, 71229 Leonberg-Hoefingen (DE)
(86) Internationale Anmeldenummer: PCT/EP2016/074653
(87) Internationale Veröffentlichungsnummer: WO 2017/064225

(56) Entgegenhaltungen:
- DE-A1-102011 004 495
- DE-A1-102012 204 172
- DE-A1-102013 221 697
- DE-T2- 69 636 857

## Beschreibung

Die vorliegende Erfindung betrifft eine Handwerkzeugmaschine, insbesondere einen Stabschrauber, einen Bohrschrauber oder einen Akku-Bohrschrauber, nach dem Oberbegriff des Anspruchs 1, mit einem in Rotation versetzbaren Werkzeugträger, der über ein Getriebe von einem Antriebsmotor antreibbar ist.

### Stand der Technik

Handwerkzeugmaschinen mit einem Getriebe, insbesondere einem Planetengetriebe, wie zum Beispiel ein Stabschrauber, ein Akku-Bohrschrauber oder eine Bohrmaschine weisen in der Regel eine vom Bediener einstellbare Sicherheitskupplung auf, so dass die Handwerkzeugmaschine bei Überschreiten eines vordefinierten Drehmomentes nicht unkontrolliert weiterdreht. So ist beispielsweise in der DE 197 37 234 A1 ein Werkzeug mit einem in Rotation versetzbaren Werkzeugträger offenbart, wobei der Werkzeugträger über ein Planetengetriebe von einem Antriebsmotor antreibbar ist und das Hohlrad des Planetengetriebes über eine Rutschkupplung mit dem Getriebegehäuse derart zusammenwirkt, dass bei Erreichen eines einstellbaren Drehmomentes sich eine Druckplatte von der Kupplung wegbewegt, wodurch eine Relativdrehung des Hohlrades zu dem Getriebegehäuse ausgelöst wird.

Desweiteren sind Handwerkzeugmaschinen bekannt, bei denen mechanische und/oder elektrische Schalter die Relativdrehung des Hohlrades detektieren, ein elektrisches Signal erzeugen und die Stromzufuhr zum Motor unterbrechen. So ist in DE 696 36 857 T2 eine Handwerkzeugmaschine und einem Entkupplungssensor-Schalter beschrieben, der das Au-ßereingriffkommen einer Kupplung erfasst. Aus DE 10 2012 204 172 A1 ist außerdem eine Handwerkzeugmaschine mit einem Beschleunigungssensor bekannt, der eine Detektion einer Aktivierung der Drehmomentkupplung ermöglicht.

Nachteilig am Stand der Technik ist, dass aufgrund der Elastizität der verwendeten Bauteile, bei ungünstigen Arbeitsfällen mit plötzlich auftretenden Lasten und Vibrationen elektrische Signal erzeugt werden und die Stromzufuhr zum Motor unterbrochen wird, obwohl keine Relativdrehung des Hohlrades erfolgte.

### Offenbarung der Erfindung

Aufgabe der Erfindung ist es die oben genannten Nachteile zu verbessern und eine Handwerkzeugmaschine bereitzustellen, die bei Erreichen eines zuvor von einem Bediener eingestellten Drehmomentes eine zuverlässige Detektion einer Relativdrehung des Hohlrades ermöglicht und dabei möglichst einfach aufgebaut und kostengünstig ist.

Diese Aufgabe wird durch eine Handwerkzeugmaschine gemäß Anspruch 1 gelöst. Vorteilhafte Ausgestaltungen, Varianten und Weiterbildungen der Erfindung sind den Unteransprüchen zu entnehmen.

Eine derartige Handwerkzeugmaschine weist eine Drehmomentenkupplung, insbesondere eine vom Bediener einstellbaren Drehmomentenkupplung, sowie ein Getriebe zur Übertragung eines von einem Antriebsmotor erzeugten Drehmomentes auf eine Antriebswelle auf. Das Getriebe ist vorteilhafterweise ein Planetengetriebe, wobei die Drehmomentenkupplung derart konstruiert ist, dass ein Kupplungsbauteil bei einem Überrasten der Drehmomentenkupplung einen, insbesondere axialen, Verschiebungsweg zurücklegt. Ferner umfasst die Handwerkzeugmaschine eine Steuerungseinheit und einen Sensor, wobei der Sensor das Kupplungsbauteil auf eine, insbesondere axiale, Verschiebung überwacht und korrespondierende Sensorsignale an die Steuerungseinheit sendet. Die Steuerungseinheit ist dazu ausgelegt, den Antriebsmotor in Abhängigkeit von den empfangenen Sensorsignalen zu steuern, insbesondere auszuschalten. Es ist ferner vorgesehen, dass die Steuerungseinheit die empfangenen Sensorsignale einer Plausibilitätskontrolle unterzieht, um festzustellen, ob ein tatsächliches Überrasten der Drehmomentenkupplung vorliegt. Somit kann gewährleistet werden, dass die Stromzufuhr zum Antriebsmotor auch während ungünstiger Arbeitsfälle, wie beispielsweise plötzlich auftretende Lasten und Vibrationen, bestehen bleibt.

Vorteilhafterweise ist das Kupplungsbauteil eine Druckplatte, wobei sich zum Lösen der Drehmomentenkupplung die Druckplatte in axialer Richtung verschiebt.

Durch die axiale Relativbewegung der Druckplatte wird eine axiale Relativbewegung zwischen einem Schaltelement, welches bevorzugterweise als separates Bauteil ausgeführt ist und derart axial spielarm an der Druckplatte eingehängt, dass es dieselbe axiale Relativbewegung ausführt wie die Druckplatte, und dem zugeordneten Sensor, insbesondere einem optischen Sensor, hervorgerufen. Auf diese Weise kann eine sichere und zuverlässige Überwachung der Drehmomentenbegrenzung ohne mehrmaligen Überrasten der Drehmomentenkupplung gewährleistet werden. Die Verwendung eines optischen Sensors und einem Schaltelement ist platzsparend, so dass die Baulänge und die Baubreite der Handwerkzeugsmaschine nicht verändert werden muss.

Die Steuerungseinheit ordnet den von dem Sensor empfangenen Sensorsignalen Steuersignale zu. Die Sensorsignale werden entweder einem ersten Steuersignal oder einem zweiten Steuersignal zugeordnet. Dabei repräsentiert das erste Steuersignal, dass keine Bewegung des Kupplungsbauteils stattgefunden hat. Das zweite Steuersignal repräsentiert hingegen, dass eine Bewegung des Kupplungsbauteils stattgefunden hat. Die Unterscheidung zwischen dem ersten Steuersignal und dem zweiten Steuersignal erfolgt zum Beispiel anhand eines Grenzwertes oder eines Grenzwertbereiches für die Sensorsignale.

Die Steuerungseinheit stellt bei einem n-maligen Wechsel zwischen dem ersten Steuersignal und dem zweiten Steuersignal innerhalb einer zuvor definierten maximal zulässigen Zeit tmax eine erste Bedingung für ein tatsächliches Überrasten der Drehmomentenkupplung und/oder innerhalb einer zuvor definierten minimal zulässigen Zeit tmin eine zweite Bedingung für ein tatsächliches Überrasten der Drehmomentenkupplung fest. Da beispielsweise ein Wechsel zwischen dem ersten Steuersignal und dem zweiten Steuersignal vorkommen kann, ohne dass ein tatsächliches Überrasten der Drehmomentenkupplung vorliegt, sind für ein eindeutiges Erkennen des tatsächlichen Überrastens der Drehmomentenkupplung wenigstens zwei, insbesondere drei, Signalwechsel, alternativ auch mehr als drei Signalwechsel notwendig. Somit stellt die Steuerungseinheit ein tatsächliches Überrasten der Drehmomentenkupplung fest, wenn entweder die erste Bedingung und/oder die zweite Bedingung für ein tatsächliches Überrasten der Drehmomentenkupplung erfüllt sind. Auf diese Weise kann vermieden werden, dass die Stromzufuhr zum Antriebsmotor bei fehlerhaft, bzw. unzureichend ausgesandten Signalwechseln aufgrund von plötzlich auftretenden Lasten und Vibrationen, bestehen bleicht und nicht unterbrochen wird.

In der bereits beschriebenen Ausführungsvariante erfasst der Sensor die jeweilige axiale Relativbewegung des Schaltelementes bzw. der Druckplatte und die Steuerungseinheit steuert bzw. schaltet den Antriebsmotor entsprechend eines Erkannten tatsächlichen Überrastens ab. Um dies zu gewährleisten ist es von Vorteil, wenn das Schaltelement über eine Spaltdichtung in einen abgeschlossenen Bereich des Sensors ragt, wobei der Sensor toleranzarm bzw. weitestgehend spielfrei in einer Ausnehmung des Kupplungsgehäuses aufgenommen ist. Aufgrund der Spaltdichtung ist es möglich, dass der abgeschlossene Bereich gegenüber dem Kupplungsgehäuse abgedichtet und der Sensor vor Schmutz geschützt ist. Erfindungsgemäß ist die Steuerungseinheit konfiguriert, den Antriebsmotor zu steuern, insbesondere auszuschalten, sobald ein tatsächliches Überrasten der Drehmomentenkupplung bei einem zuvor vom Bediener eingestellten Drehmoment festgestellt wird.

Ein weiteres Kriterium für das Vorliegen eines tatsächlichen Überrastens ist somit die benötigte Zeit, in welcher während des Überrastens der Drehmomentenkupplung eine zuvor definierte Anzahl von Signalwechseln zwischen dem ersten Steuersignal und dem zweiten Steuersignal vorkommen können. In einer besonders vorteilhaften Ausgestaltung ist die Steuerungseinheit konfiguriert, die minimale zulässige Zeit tmin oder die maximale zulässige Zeit tmax in Abhängigkeit von der Motordrehzahl n zu bestimmen. Die zulässige Zeit t ergibt sich grundsätzlich aus der Motordrehzahl n und den Abstand von einer Raste zur nächsten Raste, wodurch sich ein linearer Zusammenhang zwischen der Motordrehzahl n und der minimalen zulässigen Zeit tmin ergibt. Allerdings kann die Motordrehzahl n in der Regel während des Betriebs nicht zu 100 Prozent korrekt bestimmt werden, so dass in einer besonders bevorzugten Ausführungsform zu der zulässigen Zeit t ein Sicherheitszuschlag addiert werden sollte. Vorteilhafterweise sollte somit ein nichtlinearer Zusammenhang zwischen der Motordrehzahl n und der minimalen zulässigen Zeit tmin oder der maximalen zulässigen Zeit tmax zugrunde gelegt werden.

Sinnvoll ist es, wenn die maximal zulässige Zeit tmax einen Bereich von mindestens zwei, insbesondere drei Rasten abdeckt, wobei es von Vorteil ist, wenn die Anzahl der Rasten über den gesamten Drehzahlbereich so klein wie möglich ist. In einer besonders vorteilhaften Ausgestaltung der Erfindung kann die maximale zulässige Zeit tmax nach folgender Formel bestimmt werden:
- tmax =: a*b*I_Rast_speed*x/n_motor
Dabei gilt:
- a =: Anzahl Rasten bis zum Steuern, insbesondere Abschalten, des Antriebsmotors;
- b =: Anzahl Rasten am Kupplungsbauteil, insbesondere Hohlrad;
- l_Rast_Speed =: Übersetzung des Antriebsmotors zu einer Einzelraste bei einer blockierten Antriebswelle; und
- x =: Getriebegang.

Auf diese Weise kann die Anzahl der Rasten zuvor fest definiert werden.

Bevorzugterweise umfasst die Steuerungseinheit einen Zeitgeber, wobei der Zeitgeber bei einem ersten Signalwechsel ein Startsignal aussendet und eine Zeitmessung startet, und wobei die Steuerungseinheit die Zeitmessung abbricht, wenn innerhalb der maximal zulässigen Zeit tmax nicht zwei weitere Signalwechsel detektiert werden. Alternativ ist vorgesehen, dass der Zeitgeber bei jedem Signalwechsel eine neue Zeitmessung startet, wobei die Steuerungseinheit jede Zeitmessung separat daraufhin überwacht, ob innerhalb der jeweils maximal zulässigen Zeit tmax zwei weitere Signalwechsel erfolgen.

Besonders vorteilhaft umfasst die Handwerkzeugmaschine einen weiteren Sensor zur Detektion eines Getriebegangs x, wobei in einer erfindungsgemäßen Ausgestaltung die Steuerungseinheit konfiguriert ist, die minimale zulässige Zeit tmin oder die maximale zulässige Zeit tmax in Abhängigkeit von der Motordrehzahl n und dem Getriebegang x zu bestimmen. Bevorzugterweise sind in der Steuerungseinheit festgelegte Werte für die minimale zulässige Zeit tmin oder die maximale zulässige Zeit tmax in Abhängigkeit von der Motordrehzahl n und dem Getriebegang x hinterlegt.

Als Sensor ist ein optischer Sensor, insbesondere eine Lichtschranke, ganz insbesondere eine Gabellichtschranke besonders vorteilhaft, da mit dieser eine Relativbewegung des Schaltelementes einfach und schnell erfasst werden kann.

In einer bevorzugten Ausführungsform ist die Handwerkzeugmaschine ein Akku-Schrauber, eine Bohrmaschine, eine Schlagbohrmaschine oder ein Bohrhammer, wobei als Werkzeug ein Bohrer, eine Bohrkrone oder verschiedene Bitaufsätze verwendet werden können. Unter einer Handwerkzeugmaschine sollen generell sämtliche Handwerkzeugmaschinen mit einem in Rotation versetzbaren Werkzeugträger, der über ein Planetengetriebe von einem Antriebsmotor antreibbar ist wie beispielsweise Stabschrauber, Akku-Bohrer, Schlagbohrmaschinen, Multifunktionswerkzeuge, und/ oder Bohrschrauber verstanden werden sollen. Als Übertragung elektrischer Energie soll in diesem Zusammenhang insbesondere verstanden werden, dass die Handwerkzeugmaschine über einen Akku und/oder über eine Stromkabelanbindung an den Korpus Energie weiterleitet.

Weitere Merkmale, Anwendungsmöglichkeiten und Vorteile der Erfindung ergeben sich aus der nachfolgenden Beschreibung des Ausführungsbeispiels der Erfindung, welches in der Zeichnung dargestellt ist. Dabei ist zu beachten, dass die in den Figuren beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung nur einen beschreibenden Charakter hat und nicht dazu gedacht ist, die Erfindung in irgendeiner Form einzuschränken.

### Zeichnungen

Nachfolgend wird die Erfindung anhand von in den Zeichnungen dargestellten Ausführungsbeispielen näher erläutert. Es zeigen:
- Fig. 1: beispielhaft eine schematische Ansicht einer erfindungsgemäßen Handwerkzeugmaschine gemäß einer ersten Ausführungsform,
- Fig. 2: eine vergrößerte Schnittansicht eines Ausschnitts der Handwerkzeugmaschine aus Figur 1;
- Fig. 3: eine schematische Ansicht eines möglichen ersten Überrastverlaufs auf Basis von zwei Signalwechseln;
- Fig. 4: eine schematische Ansicht eines falsch detektierten Überrastverlaufs auf Basis von zwei Signalwechseln ;
- Fig. 5: eine schematische Ansicht eines tatsächlichen Überrastverlaufs auf Basis von drei Signalwechseln;
- Fig. 6: veranschaulicht einen zeitlichen linearen Zusammenhang zwischen der Motordrehzahl n und der minimalen zulässigen Zeit tmin
- Fig. 7: veranschaulicht einen zeitlichen nicht linearen Zusammenhang zwischen der Motordrehzahl n und der maximalen zulässigen Zeit tmax

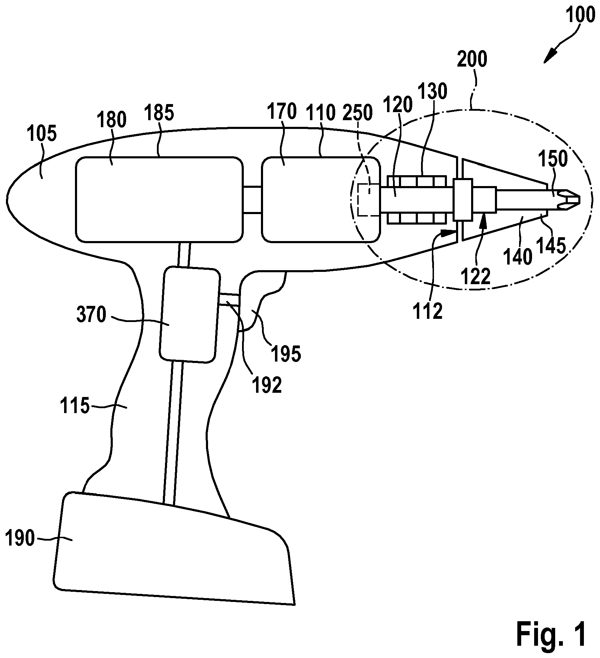

Die Figur 1 zeigt eine erfindungsgemäße Handwerkzeugmaschine 100, die ein Gehäuse 105 mit einem Handgriff 115 aufweist. Gemäß der dargestellten Ausführungsform ist die Handwerkzeugmaschine 100 zur netzunabhängigen Stromversorgung mechanisch und elektrisch mit einem Akkupack 190 verbindbar. In Fig. 1 ist die Handwerkzeugmaschine 100 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen Anwendung finden kann, bei denen ein Werkzeug in Drehungen versetzt wird, beispielsweise bei einem Akku-Bohrer, einer Akku-Schlagbohrmaschine oder einem Stabschrauber oder einer Schlagbohrmaschine etc..

In dem Gehäuse 105 sind ein von dem Akkupack 190 mit Strom versorgter, elektrischer Antriebsmotor 180 und ein Getriebe 170 angeordnet. Der Antriebsmotor 180 ist über das Getriebe 170 mit einer Antriebswelle 120 verbunden. Der Antriebsmotor 180 ist illustrativ in einem Motorgehäuse 185 angeordnet und das Getriebe 170 in einem Getriebegehäuse 110, wobei das Getriebegehäuse 110 und das Motorgehäuse 185 lediglich beispielhaft in dem Gehäuse 105 angeordnet sind. Ferner ist innerhalb des Gehäuses 105 eine Steuerungseinheit 370 angeordnet, welche zur Steuerung und/oder Regelung des Antriebsmotors 180 und des Getriebes 170 beispielsweise mittels einer eingestellten Motordrehzahl n, einem angewählten Drehmoment, einem gewünschten Getriebegang x oder dergleichen auf diese einwirkt.

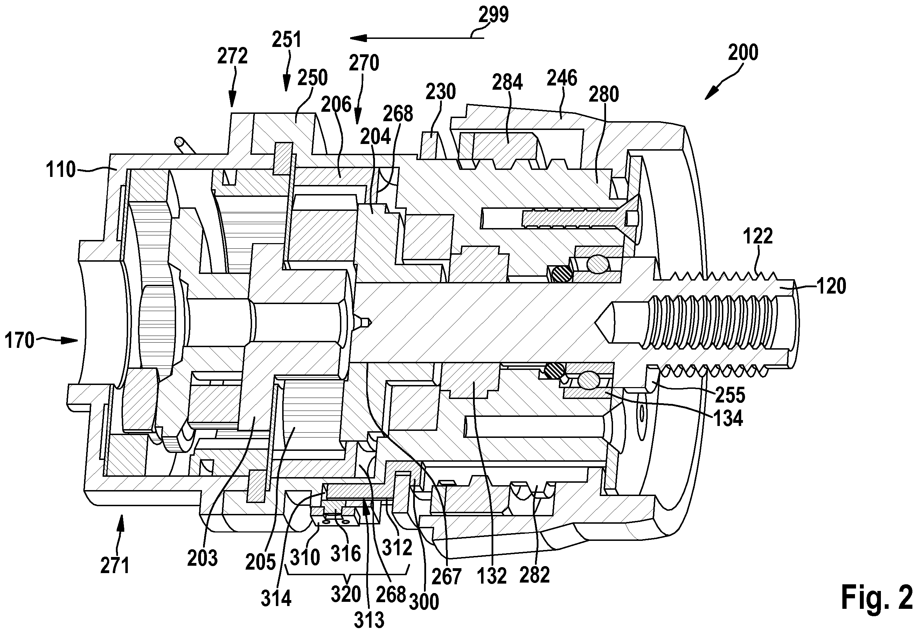

Das Getriebe 170 ist gemäß einer Ausführungsform ein mit einer Mehrzahl von Getriebegängen x ausgebildetes Planetengetriebe, dem eine Drehmomentkupplung 251 zugeordnet ist. Im Betrieb der Handwerkzeugsmaschine 100 wird das Planetengetriebe 170 vom Antriebsmotor 180 drehend angetrieben. Das Planetengetriebe 170 wird unten stehend in bezug auf eine in Figur 2 vergrößert dargestellte schematische Schnittansicht eines Ausschnitts 200 im Detail beschrieben.

Der Antriebsmotor 180 ist beispielsweise über einen Handschalter 195 betätigbar, d. h. ein- und ausschaltbar, und kann ein beliebiger Motortyp sein, beispielsweise ein elektronisch kommutierter Motor oder ein Gleichstrommotor. Vorzugsweise ist der Antriebsmotor 180 derart elektronisch steuer- bzw. regelbar, dass sowohl ein Reversierbetrieb, als auch Vorgaben hinsichtlich der gewünschten Motordrehzahl n realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Die Antriebswelle 120 ist über eine Lageranordnung 130 drehbar im Gehäuse 105 gelagert und mit einer Werkzeugaufnahme 140 versehen, die im Bereich einer Stirnseite 112 des Gehäuses 105 angeordnet ist und beispielhaft ein Bohrfutter 145 aufweist. Die Lageranordnung 130 kann hierbei am Gehäuse 105 befestigt sein, beispielsweise über zugeordnete Befestigungselemente, oder in einem zugeordneten Zwischenelement angeordnet sein, beispielsweise dem Getriebegehäuse 110 oder dem Motorgehäuse 185. Die Werkzeugaufnahme 140 dient zur Aufnahme eines Werkzeugs 150 und kann an die Antriebswelle 120 angeformt sein oder aufsatzförmig mit dieser verbunden sein. In Figur 1 ist die Werkzeugaufnahme 140 beispielhaft aufsatzartig ausgebildet und über eine an der Antriebswelle 120 vorgesehene Befestigungsvorrichtung 122 an dieser befestigt.

Die Figur 2 stellt den Ausschnitt 200 der Handwerkzeugmaschine 100 von Figur 1 dar, bei dem zwecks Klarheit und Einfachheit der Zeichnung auf eine Darstellung des Werkzeugs 150 und der Werkzeugaufnahme 140 von Figur 1 verzichtet wurde. Der Ausschnitt 200 verdeutlicht eine beispielhafte Ausgestaltung des Planetengetriebes 170, der Lageranordnung 130, der Antriebswelle 120, sowie der Drehmomentkupplung 251.

Das Planetengetriebe 170 weist beispielhaft drei im Getriebegehäuse 110 angeordnete Getriebegängen x bzw. Planetenstufen auf: eine vordere Stufe 270, eine hintere Stufe 271 und eine mittlere Stufe 272. Die vordere Planetenstufe 270 hat beispielhaft ein Sonnenrad 203 mit einer Verzahnung, mindestens ein Planetenrad 205 mit einer Verzahnung, einen Planetenträger bzw. Werkzeugträger 204 mit einer Drehmitnahmekontur 267 und wird von einem Hohlrad 206 umgriffen.

Die Drehmomentkupplung 251 ist als sogenannte Rutschkupplung ausgebildet, die mittels einer einstellbaren Einstellmutter 284 mit einer variierbaren Vorspannkraft beaufschlagbar ist. Über diese einstellbare Rutschkupplung kann ein Drehmoment eingestellt werden, wobei das Kupplungsbauteil 230 beispielsweise von Druckfedern mit einer vorgegebenen Anpresskraft in Richtung eines Pfeils 299 beaufschlagt wird. Das Kupplungsbauteil 230 beaufschlagt mehrere Druckelemente 236, welche im dargestellten Ausführungsbeispiel Druckkugeln sind, die durch Ausnehmungen im Kupplungsgehäuse 250 hindurchragen und gegen eine dem Kupplungsbauteil 230 zugewandte, und somit illustrativ vom Antriebsmotor 180 von Figur 1 abgewandte Stirnseite 268 des Hohlrads 206 mit der Anpresskraft. Bei einer Auslösung der Rutschkupplung erfährt das Hohlrad 206 eine Relativdrehung zu dem Getriebegehäuse 250. Sowohl während des Normalbetriebes als auch während des Auslösens der Rutschkupplung drehen sich sowohl der Werkzeugträger 204 als auch das Hohlrad 206.

Da der Aufbau eines Planetengetriebes dem Fachmann ausreichend bekannt ist, wird hier zwecks Knappheit der Beschreibung auf eine weitere Beschreibung der Planetenstufen 271, 272 verzichtet. Das Drehmoment des Antriebsmotors 180 von Figur 1 wird über die Planetenstufen 271, 272, 270 mittels der Drehmitnahmekontur 267 des Werkzeugträgers 204 auf die Antriebswelle 120 übertragen.

Die Antriebswelle 120 weist die illustrativ als Außengewinde ausgebildete Befestigungsvorrichtung 122 auf, an der das Bohrfutter 145 der Werkzeugaufnahme 140 von Figur 1 befestigbar ist, wobei das Außengewinde beispielsweise mit einem am Bohrfutter 145 vorgesehenen Innengewinde in Gewindeeingriff gebracht werden kann. Gemäß einer Ausführungsform ist die Antriebswelle 120 als Antriebsspindel mit einem Abstützflansch 255 ausgebildet, sodass die Lager 132, 134 der Lageranordnung 130 als Spindellager dienen. Die Lageranordnung 130 weist gemäß der dargestellten einer Ausführungsform ein erstes Lager 134 und ein von diesem beabstandetes zweites Lager 132 auf, wobei das erste Lager 134 beispielhaft als Kugellager und das zweite Lager 132 beispielhaft als Gleitlager ausgebildet ist. Es wird jedoch darauf hingewiesen, dass auch andere Lagertypen im Rahmen der vorliegenden Erfindung verwendbar sind. So können die Lager 132, 134 alternativ jeweils als Kugellager, Gleitlager, Nadelhülse, Rollenlager oder andere Wälzlagertypen realisiert werden. Die Lager 132, 134 sind in einer mit einem Außengewinde 282 versehenen Lagerhülse bzw. -buchse 280 angeordnet, an der beispielhaft ein Einstellring 246 drehbar gelagert ist. Dieser steht im Wirkeingriff mit einer Einstellmutter 284, die auf dem Außengewinde 282 der Lagerhülse 280 drehbar gelagert ist.

Es wird jedoch darauf hingewiesen, dass das Kupplungsbauteil 230 und die Druckelemente 236 lediglich beispielhaft als Druckplatte und als Druckkugeln gezeigt sind und nicht als Einschränkung der Erfindung auf eine Verwendung derartiger Druckplatten als Kupplungsbauteil 230 und Druckkugeln als Druckelemente 236 dienen. Vielmehr sind auch Kupplungsbauteil 230 und Druckelemente 236 in alternativen Ausführungsformen realisierbar, sofern diese über die Stirnseite 268 des Hohlrads 206 mit der vorgegebenen Anpresskraft beaufschlagbar sind. An der Stirnseite 268 des Hohlrades 206 ist der Anzahl der Druckelemente 236 entsprechend eine Rastfläche 231 ausgebildet, die beispielhaft als Ausbuchtungen an die Druckkugeln angeformt sind. Die Rastfläche 231 ist in der dargestellten Ausführungsform Kugelabschnittsförmig ausgebildet. Es wird jedoch darauf hingewiesen, dass beliebige Ausgestaltungen der Rastfläche 231 und des Druckelementes 236 möglich ist, solange die unten beschriebene Funktionalität der Drehmomentkupplung 251 damit erreichbar ist.

Ferner wird darauf hingewiesen, dass der Aufbau und die Wirkungsweise eines Planetengetriebes sowie das Zusammenwirken mit der dargestellten Kupplung zur Einstellung eines Drehmomentes allgemein bekannt sind, so dass im Rahmen der vorliegenden Beschreibung hierauf nicht weiter eingegangen werden soll.

Wie aus Figur 2 ersichtlich, ist die von den Druckelementen 236, dem Hohlrad 206, der Druckplatte 230 und der Stellmutter 284 bzw. dem Einstellring 246 ausgebildete Drehmomentkupplung 251 im Bereich der vorderen Planetenstufe 270 angeordnet. Dies ist jedoch lediglich beispielhaft und nicht als Einschränkung der Erfindung zu verstehen. Vielmehr kann die Drehmomentkupplung 251 in Verbindung mit einer beliebigen Planetenstufe ausgebildet sein.

Im Betrieb der Handwerkzeugmaschine 100 von Figur 1 dienen die Druckelemente 236 zusammen mit der Rastfläche 231 des Hohlrades 206 und dem Kupplungsbauteil 230 dazu, bei einer Drehung der Antriebswelle 120 die Rastfläche 231 des Hohlrades 206 bis zum Erreichen eines vordefinierten Drehmoments zu blockieren, so dass das Hohlrad 206 über das Kupplungsbauteil 230 starr mit dem Kupplungsgehäuse 250 und der Drehmitnahmekontur 267 des Werkzeugträgers 204 gekoppelt bzw. diese relativ zueinander nicht drehbar sind. Hierzu werden die Druckelemente 236 zunächst von dem Kupplungsbauteil 230 durch die Kraft der Druckfedern 238 in Richtung des Pfeils 299 mit einer vorgegebenen Anpresskraft gegen das Hohlrad 206 gedrückt und in einer entsprechenden Kupplungs- bzw. Blockierposition gehalten, in der die Druckelemente 236 in der Rastfläche 231 an der Stirnseite 268 des Hohlrades 206 blockieren.

Die Anpresskraft des Kupplungsbauteils 230 ist hierbei durch ein Verdrehen des Einstellrings 246 und somit der Stellmutter 284 einstellbar, wobei die Stellmutter 284 bevorzugt derart verstellbar bzw. verdrehbar ist, dass diese eine axiale Verschiebung des Kupplungsbauteils 230 in einer sogenannten "Kopplung" vollständig, d. h. drehmomentunabhängig, unterbinden bzw. blockieren kann. Alternativ hierzu kann ein geeignetes Blockierelement zur Begrenzung einer axialen Verschiebung des Kupplungsbauteils 230 verwendet werden, um dieses in der Bohrstellung zu blockieren.

Im Kupplungsbetrieb der Drehmomentkupplung 251 wirken Verzahnungsreibkräfte zwischen den Verzahnungen und/oder Lagerreibkräfte der Planetenräder 205, die von einem auf die Antriebswelle 120 übertragenen Drehmoment abgängig sind. Diese Reibkräfte wirken einer axialen Bewegung des Kupplungsbauteils 230 entgegen und wirken somit unterstützend für die Druckfedern 238, sodass diese mit vergleichsweise geringen Federkräften ausgelegt werden können. Dies ermöglicht wiederum ein vergleichsweise abgeschwächtes Verrasten des Einstellrings 246 an der Lagerhülse 280, da eine entsprechende Rückstellneigung der Stellmutter 284 durch die geringen Federkräfte der Druckfedern 238 zumindest reduziert werden kann. Somit sind bei einer Betätigung des Einstellrings 246 relativ geringe Bedienkräfte erforderlich.

Bei Erreichen des vordefinierten Drehmoments bewirken die Druckelemente 238 und die Ausbuchtungen der Rastfläche 231 an der Stirnseite 268 des Hohlrades 206 zum Lösen der Drehmomentkupplung 251 eine axiale Verschiebung des Kupplungsbauteils 230 gegen die oben genannten Reibkräfte und die Federkräfte der Druckfedern 238, wobei die Druckelemente 238 nach Art einer Ratschbewegung über die zugeordneten Ausbuchtungen der Rastfläche 231 hinweg verschoben werden. Somit wird die Kopplung zwischen dem Hohlrad 206 und dem Kupplungsgehäuse 250 der Drehmomentenkupplung 251 aufgehoben, so dass eine Drehung des Hohlrads 206 im Getriebegehäuse 110 relativ zum Werkzeugträger 204 ermöglicht wird.

Ferner zeigt die Figur 2 ein Schaltelement 300 und einen dem Schaltelement 300 zugeordneter Sensor 310, der im dargestellten Ausführungsbeispiel als optischer Sensor 310 mit einer Lichtschranke, insbesondere einer Gabellichtschranke, ausgeführt ist. Das Schaltelement 300 steht mit dem im Wesentlichen kreisringförmigen Kupplungsbauteil 230 derart axial spielarm im Eingriff, dass durch die axiale Relativbewegung des Kupplungsbauteils 230 dieselbe axiale Relativbewegung zwischen dem Schaltelement 300 und dem zugeordneten Sensor 310 hervorgerufen wird. Dabei erfolgt die Anbindung zwischen dem Kupplungsbauteil 230 und dem Schaltelement 300 über ein von dem Kupplungsbauteil 230 in radialer Richtung nach innen liegenden Verbindungsabschnitt 307, der in der in Figur 2 dargestellten Ausführungsform als Nase 308 ausgeführt ist. Ferner weist das Kupplungsgehäuse 250 eine nutförmige Ausnehmung 313 auf, die derart ausgestaltet ist, dass eine weitestgehend spielfreie Führung des Schaltelementes 300 gewährleisten werden kann. Auf diese Weise kann das Schaltelement 300 die axiale Relativbewegung dem Kupplungsbauteil 230 übertragen, so dass der Sensor 310 jede axiale Relativbewegung des Schaltelementes 300 bzw. dem Kupplungsbauteil 230 sicher und exakt erfassen kann. Der Sensor 310 ist dazu ausgelegt, Sensorsignale an die Steuerungseinheit 370 zu senden. Die Steuerungseinheit 370 ist dazu ausgelegt, die Sensorsignale des Sensors 310 zu empfangen. Die Steuerungseinheit 370 ist ferner dazu ausgelegt, den von dem Sensor 310 empfangenen Sensorsignalen Steuersignale zuzuordnen. Die Steuerungseinheit 370 ordnet einem Sensorsignal ein erstes Steuersignal 351 zu, welches eine fehlende Bewegung des Kupplungsbauteils 230 repräsentiert, oder ein zweites Steuersignal 352, welches eine Bewegung des Kupplungsbauteils 230 repräsentiert. Die Zuordnung der Sensorsignale zu einem der beiden Steuersignale, also dem ersten Steuersignal oder dem zweiten Steuersignal, erfolgt anhand eines Grenzwertes oder eines Grenzwertbereichs, der für die Sensorsignale definiert ist.

Das Kupplungsgehäuse 250 weist zudem eine Ausnehmung auf, welche eine weitestgehend spielfreie Aufnahme des Sensors 310 gewährleistet. Dabei ist der Sensor 310 über eine Platine 316, die in radialer Richtung außen an dem Kupplungsgehäuse 250 angebracht ist, mit der in Figur 2 nicht dargestellten Steuerungseinheit 370 des Antriebsmotors 180 verbunden. Ausgehend von der Platine 316 ragt der Sensor 310 in radialer Richtung nach innen in die Ausnehmung des Kupplungsgehäuse 250, wobei die Platine 316 derart an dem Kupplungsgehäuse 250 anliegt, dass der Sensor 310 gegenüber dem Kupplungsgehäuse 250 weitestgehend abgedichtet ist und einen abgeschlossenen Bereich 314 ausbildet.

Das Schaltelement 300 ragt über die nutförmige Ausnehmung 313 im Kupplungsgehäuse 250 in den abgeschlossenen Bereich 314 des Sensors 310, wobei der abgeschlossene Bereich 314 mittels einer Spaltdichtung 312 derart abgedichtet ist, dass der Sensor 310 optimal gegen Schmutz geschützt ist. Bei Erreichen des vordefinierten Drehmomentes bewirkt die axiale Relativbewegung des Kupplungsbauteils 230, dass der Sensor 310 diese erfasst. Der Sensor 310 sendet in Abhängigkeit von der axialen Relativbewegung korrespondierende Sensorsignale an die Steuerungseinheit 370. Die Steuerungseinheit 370 unterzieht die übermittelten Sensorsignale des Sensors 310 einer Plausibilitätskontrolle, mittels derer die Steuerungseinheit 370 feststellt, ob ein tatsächliches Überrasten der Drehmomentenkupplung 251 vorliegt oder nicht und steuert den Antriebsmotor 180 in Abhängigkeit von den empfangenen Sensorsignalen.

Die Steuerungseinheit 370 ordnet den von dem Sensor 310 empfangenen Sensorsignalen Steuersignale zu. Die Steuerungseinheit 370 ordnet einem Sensorsignal ein erstes Steuersignal 351 oder ein zweites Steuersignal 352 zu, je nachdem, ob eine Bewegung des Kupplungsbauteils 230 erfolgt ist oder nicht. Das erste Steuersignal 351 repräsentiert eine fehlende Bewegung des Kupplungsbauteils 230, während das zweite Steuersignal 352 gerade eine Bewegung des Kupplungsbauteils 230 repräsentiert.

Die Steuerungseinheit 370 umfasst ferner einen nicht im Detail dargestellten Zeitgeber, wobei der Zeitgeber bei einem ersten Signalwechsel 341 ein Startsignal aussendet und eine Zeitmessung startet. Werden innerhalb der innerhalb der maximal zulässigen Zeit tmax nicht zwei weitere Signalwechsel 342, 343 detektiert, bricht die Steuerungseinheit 370 die Zeitmessung ab. Alternativ ist vorgesehen, dass der Zeitgeber bei jedem Signalwechsel 341, 342, 343 eine neue Zeitmessung startet. In diesem Fall überwacht die Steuerungseinheit 370 jede Zeitmessung separat daraufhin, ob innerhalb der jeweils maximal zulässigen Zeit tmax zwei weitere Signalwechsel 341, 342, 343 erfolgen.

Die Handwerkzeugmaschine 100 kann ferner einen weiteren Sensor zur Detektion eines Getriebegangs x umfassen. Entsprechend ist die Steuerungseinheit 370 auch konfiguriert, die minimale zulässige Zeit tmin oder die maximale zulässige Zeit tmax in Abhängigkeit von der Motordrehzahl n und dem Getriebegang x zu bestimmen, wobei alternativ oder zusätzlich in der Steuerungseinheit 370 bereits Werte für die minimale zulässige Zeit tmin oder die maximale zulässige Zeit tmax in Abhängigkeit von der Motordrehzahl n und dem Getriebegang x hinterlegt sein können.

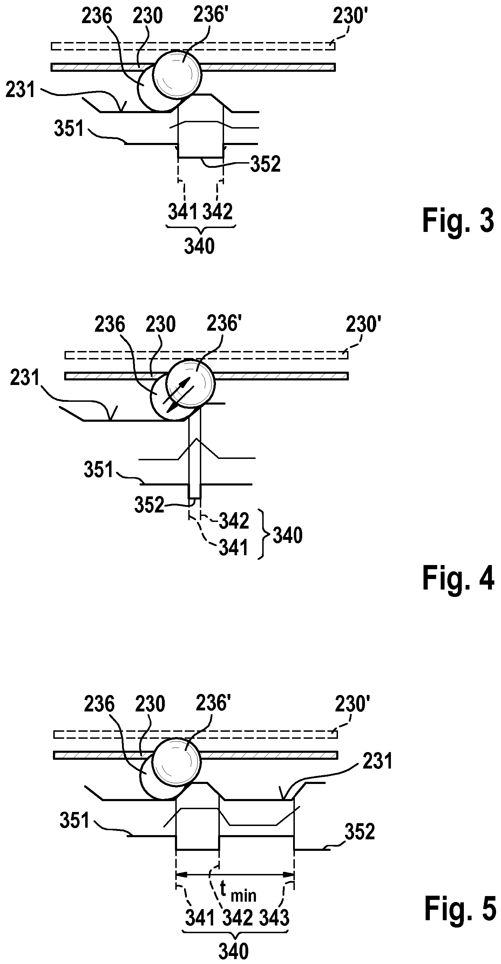

In Figur 3 ist ein mögliches Überrasten der Drehmomentenkupplung 251 bei einem zuvor definierten Drehmoment dargestellt, wobei die Druckelemente 236 das Kupplungsbauteil 230 ausgehend von der Kupplungsposition in einer axialen Verschiebung gegen die oben genannten Reibkräfte und die Federkräfte der Druckfedern 238 in eine Überrastposition 230', 236' verschieben. In beiden Positionen drehen sich sowohl der Werkzeugträger 204 als auch das Hohlrad 206. Die Druckelemente 236 werden dabei über die zugeordneten Ausbuchtungen der Rastfläche 231 hinweg verschoben. Somit wird die Kopplung zwischen dem Hohlrad 206 und dem Kupplungsgehäuse 250 der Drehmomentenkupplung 251 aufgehoben, so dass eine Drehung des Hohlrads 206 im Getriebegehäuse 110 relativ zum Werkzeugträger 204 ermöglicht wird. In der dargestellten Variante des Überrastens findet ein erster Signalwechsel 341 und ein zweiter Signalwechsel 342 zwischen dem ersten Steuersignal 351 und dem zweiten Steuersignal 352 statt. Ob dabei ein tatsächliches Überrasten der Drehmomentenkupplung 251, wie in Figur 5 dargestellt, vorliegt oder ob, wie in Figur 4 verdeutlicht dargestellt, der erste Signalwechsel 341 und der zweite Signalwechsel 342 zwischen dem ersten Steuersignal 351 und dem zweiten Steuersignal 352 vorkommt, ohne dass ein tatsächliches Überrasten der Drehmomentenkupplung 251 vorliegt, kann anhand von lediglich einem, insbesondere zwei, Signalwechseln 341, 342 nicht zuverlässig festgestellt werden. Für ein eindeutiges Erkennen eines tatsächlichen Überrastens der Drehmomentenkupplung 251, wie in Figur 5 dargestellt, sind wenigstens zwei, vorzugsweise drei, Signalwechsel 341, 342, 343 notwendig. Dabei ist vorgesehen, dass die Steuerungseinheit 370 den ersten Signalwechsel 341, den zweiten Signalwechsel 342 und einen dritten Signalwechsel 343 zwischen dem ersten Steuersignal 352 und dem zweiten Steuersignal 352 innerhalb einer zuvor definierten minimalen zulässigen Zeit tmin feststellt, wobei die Anzahl der Signalwechsel 341, 342, 343 auch größer 3 sein kann. Grundsätzlich ist vorgesehen, dass die Steuerungseinheit 370 bei einem zweimaligen, insbesondere dreimaligen, Signalwechsel 341, 342, 343 oder einem mehr als dreimaligen Signalwechsel 341, 342, 343 zwischen dem ersten Steuersignal 351 und dem zweiten Steuersignal 352 innerhalb einer zuvor definierten maximal zulässigen Zeit tmax eine erste Bedingung und alternativ oder zusätzlich innerhalb einer zuvor definierten minimal zulässigen Zeit tmin eine zweite Bedingung für ein tatsächliches Überrasten der Drehmomentenkupplung 251 feststellt. Die Steuerungseinheit 370 ist derart konfiguriert, dass sie bei Feststellung der ersten Bedingung und/oder der zweiten Bedingung den Antriebsmotor 180 abschaltet.

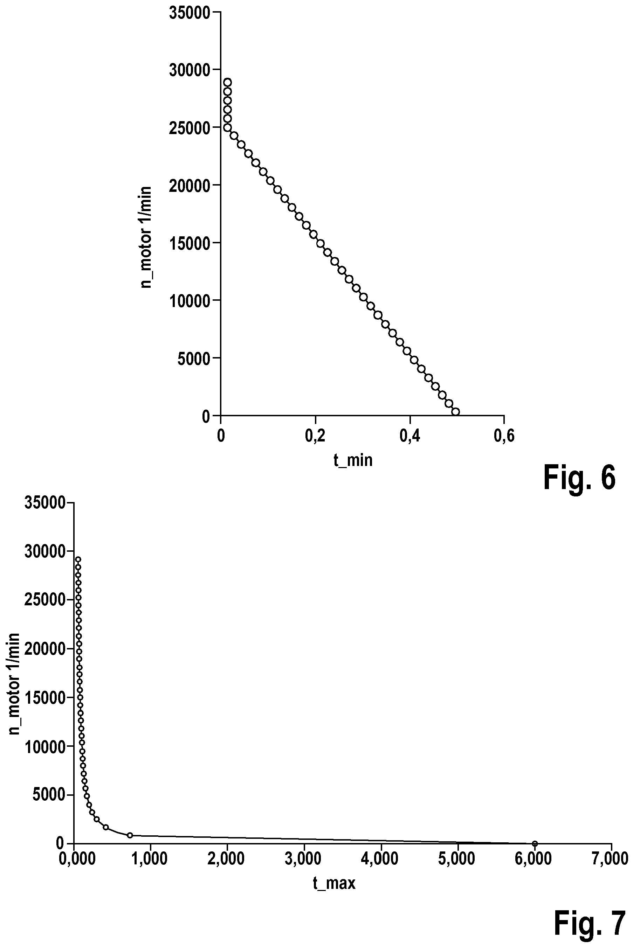

Für das Vorliegen eines tatsächlichen Überrastens ist die benötigte Zeit, in welcher während des Überrastens der Drehmomentenkupplung 251 eine zuvor definierte Anzahl von Signalwechseln 341, 342, 343 zwischen dem ersten Steuersignal 351 und dem zweiten Steuersignal 352 vorkommen können. Ferner ist die Steuerungseinheit 370 konfiguriert, die minimale zulässige Zeit tmin oder die maximale zulässige Zeit tmax in Abhängigkeit von der Motordrehzahl n zu bestimmen. Die zulässige Zeit t ergibt sich grundsätzlich aus der Motordrehzahl n und den Abstand von einer Raste 231 zur nächsten Raste 231. Dabei hat sich gezeigt, dass es sinnvoll ist, wenn die minimal zulässige Zeit tmin einen Bereich von drei Rasten 231 abdeckt. Wie in Figur 6 dargestellt ergibt sich auf diese Weise ein linearer Zusammenhang zwischen der Motordrehzahl n und der minimalen zulässigen Zeit tmin.

Allerdings kann die Motordrehzahl n in der Regel während des Betriebs nicht zu 100 Prozent korrekt bestimmt werden, so dass zu der zulässigen Zeit tmin ein Sicherheitszuschlag addiert werden sollte, wobei sich in der Praxis gezeigt hat, dass es von Vorteil ist, wenn die Anzahl der Rasten 231 über den gesamten Motordrehzahlbereich n so klein wie möglich ist. Auf dieser Basis kann die maximale zulässige Zeit tmax nach folgender Formel bestimmt werden:
- tmax =: a*b*I_Rast_speed*x/n_motor
Dabei gilt:
- a =: Anzahl Rasten 231 bis zum Steuern, insbesondere Abschalten, des Antriebsmotors;
- b =: Anzahl Rasten 231 am Hohlrad 206;
- l_Rast_Speed =: Übersetzung des Antriebsmotors 180 zu einer Einzelraste 231 bei einer blockierten Antriebswelle; und
- x =: Getriebegang.

Auf diese Weise kann die Anzahl der Rasten 231 zuvor fest definiert werden, so dass ein konstanter zulässiger Drehwinkel für die Zeitmessung in der Bohrstellung erfolgt. Ferner kann auf diese Weise, wie in Figur 7 dargestellt, ein nicht linearer Zusammenhang zwischen der Motordrehzahl n und der minimalen zulässigen Zeit tmin oder der maximalen zulässigen Zeit tmax zugrunde gelegt werden.

Grundsätzlich wird darauf hingewiesen, dass sowohl die Form des Kupplungsbauteils 230 als auch die Ausgestaltung der Druckelemente 236 oder des Sensors 310 lediglich beispielhaft gezeigt sind und nicht als Einschränkung der Erfindung dienen. Vielmehr ist die Ausgestaltung des Kupplungsbauteils 230 beliebig realisierbar, wobei ausschlaggebend ist, dass eine optimale Verbindung zwischen dem Kupplungsbauteils 230 und den Druckelementen 236 sowie eine optimales Zusammenwirken mit dem Sensor 310 und der Steuerungseinheit 370 gewährleistet ist.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Handwerkzeugmaschine (100) umfassend eine Drehmomentenkupplung (251) sowie ein Getriebe (170) zur Übertragung eines von einem Antriebsmotor (180) erzeugten Drehmomentes auf eine Antriebswelle (120); wobei die Drehmomentenkupplung (251) derart konstruiert ist, dass ein Kupplungsbauteil (230) beim Überrasten der Drehmomentenkupplung (251) einen Verschiebungsweg zurücklegt;
eine Steuerungseinheit (370) und einen Sensor (310), wobei der Sensor (310) das Kupplungsbauteil (230) auf eine Verschiebung überwacht und korrespondierende Sensorsignale an die Steuerungseinheit (370) sendet; wobei die Steuerungseinheit (370) dazu ausgelegt ist, den Antriebsmotor (180) in Abhängigkeit von den empfangenen Sensorsignalen zu steuern;
wobei die Steuerungseinheit (370) ferner dazu ausgelegt ist, die empfangenen Sensorsignale einer Plausibilitätskontrolle zu unterziehen, um festzustellen, ob ein tatsächliches Überrasten der Drehmomentenkupplung (251) vorliegt;
**dadurch gekennzeichnet, dass**
die Steuerungseinheit (370) den Sensorsignalen ein erstes Steuersignal (351) zuordnet, welches eine fehlende Bewegung des Kupplungsbauteils (230) repräsentiert, oder ein zweites Steuersignal (352) zuordnet, welches eine Bewegung des Kupplungsbauteils (230) repräsentiert;
wobei die Steuerungseinheit (370) derart konfiguriert ist, dass bei einem n-maligen Wechsel zwischen dem ersten Steuersignal (351) und dem zweiten Steuersignal (352) innerhalb einer zuvor definierten maximal zulässigen Zeit (tmax) eine erste Bedingung für ein tatsächliches Überrasten der Drehmomentenkupplung (251) feststellt, wobei n ≥ 2, insbesondere n ≥ 3, ist,
und/oder die Steuerungseinheit (370) bei einem n-maligen Wechsel zwischen dem ersten Steuersignal (351) und dem zweiten Steuersignal (352) innerhalb einer zuvor definierten minimal zulässigen Zeit (tmin) eine zweite Bedingung für ein tatsächliches Überrasten der Drehmomentenkupplung (251) feststellt, wobei n ≥ 2, insbesondere n ≥ 3, ist.

2. Handwerkzeugmaschine (100) nach Anspruch 1, **dadurch gekennzeichnet, dass** die Steuerungseinheit (370) ein tatsächliches Überrasten der Drehmomentenkupplung (251) feststellt, wenn entweder die erste Bedingung und/oder die zweite Bedingung für ein tatsächliches Überrasten der Drehmomentenkupplung (251) erfüllt sind.

3. Handwerkzeugmaschine (100) nach einem der vorhergehenden Ansprüche, **dadurch gekennzeichnet, dass** die Steuerungseinheit (370) konfiguriert ist, den Antriebsmotor (180) zu steuern, insbesondere auszuschalten, sobald die Steuerungseinheit (370) ein tatsächliches Überrasten der Drehmomentenkupplung (251) feststellt.

4. Handwerkzeugmaschine (100) nach einem der vorhergehenden Ansprüche, **dadurch gekennzeichnet, dass** die Steuerungseinheit (370) konfiguriert ist, die minimale zulässige Zeit (tmin) oder die maximale zulässige Zeit (tmax) in Abhängigkeit von einer Motordrehzahl zu bestimmen.

5. Handwerkzeugmaschine (100) nach Anspruch 4, **dadurch gekennzeichnet, dass** ein linearer Zusammenhang zwischen der Motordrehzahl und der minimalen zulässigen Zeit (tmin) oder der maximalen zulässigen Zeit (tmax) zugrunde gelegt wird.

6. Handwerkzeugmaschine (100) nach Anspruch 4, **dadurch gekennzeichnet, dass** ein nichtlinearer Zusammenhang zwischen der Motordrehzahl und der minimalen zulässigen Zeit (tmin) oder der maximalen zulässigen Zeit (tmax) zugrunde gelegt wird.

7. Handwerkzeugmaschine (100) nach einem der vorhergehenden Ansprüche, **dadurch gekennzeichnet, dass** die maximale zulässige Zeit (tmax) nach folgender Formel tmax = a*6*I_Rast_speed*x/n_motor bestimmt wird; wobei a = Anzahl Rasten bis zum Steuern, insbesondere Abschalten, des Antriebsmotors; l_Rast_Speed = Übersetzung des Antriebsmotors (180) bei einer blockierten Antriebswelle (120); und x = Getriebegang (170) ist.

8. Handwerkzeugmaschine (100) nach einem der vorhergehenden Ansprüche, **dadurch gekennzeichnet, dass** die Steuerungseinheit (370) einen Zeitgeber umfasst, wobei der Zeitgeber bei einem ersten Signalwechsel (341) ein Startsignal aussendet und eine Zeitmessung startet, und wobei die Steuerungseinheit (370) die Zeitmessung abbricht, wenn innerhalb der der maximal zulässigen Zeit (tmax) nicht zwei weitere Signalwechsel (342, 343) detektiert werden.

9. Handwerkzeugmaschine (100) nach Anspruch 8, **dadurch gekennzeichnet, dass** der Zeitgeber bei jedem Signalwechsel (341, 342, 343) eine neue Zeitmessung startet, wobei die Steuerungseinheit (370) jede Zeitmessung separat daraufhin überwacht, ob innerhalb der jeweils maximal zulässigen Zeit (tmax) zwei weitere Signalwechsel erfolgen.

10. Handwerkzeugmaschine (100) nach einem der vorhergehenden Ansprüche, **dadurch gekennzeichnet, dass** die Handwerkzeugmaschine (100) einen weiteren Sensor (310) zur Detektion eines Getriebegangs (x) umfasst.

11. Handwerkzeugmaschine (100) nach Anspruch 10, **dadurch gekennzeichnet, dass** die Steuerungseinheit (370) konfiguriert ist, die minimale zulässige Zeit (tmin) oder die maximale zulässige Zeit (tmax) in Abhängigkeit von der Motordrehzahl (n) und dem Getriebegang (x) zu bestimmen.

12. Handwerkzeugmaschine (100) nach Anspruch 10 oder 11, **dadurch gekennzeichnet, dass** in der Steuerungseinheit (370) festgelegte Werte für die minimale zulässige Zeit (tmin) oder die maximale zulässige Zeit (tmax) in Abhängigkeit von der Motordrehzahl (n) und dem Getriebegang (x) hinterlegt sind.

## Claims

1. Handheld power tool (100) comprising a torque coupling (251) and a transmission (170) for transmitting a torque, which is generated by a drive motor (180), to a drive shaft (120); wherein the torque coupling (251) is constructed in such a way that a coupling component (230) covers a displacement distance in the event of the torque coupling (251) slipping;
a control unit (370) and a sensor (310), wherein the sensor (310) monitors the coupling component (230) for a displacement and sends corresponding sensor signals to the control unit (370); wherein the control unit (370) is designed to control the drive motor (180) depending on the sensor signals received;
wherein the control unit (370) is further designed to subject the sensor signals received to a plausibility check in order to establish whether the torque coupling (251) is actually slipping;
**characterized in that**
the control unit (370) assigns a first control signal (351), which represents a lack of movement of the coupling component (230), or a second control signal (352), which represents a movement of the coupling component (230), to the sensor signals;
wherein the control unit (370) is configured in such a way that it establishes a first condition for actual slipping of the torque coupling (251) given an n-times change between the first control signal (351) and the second control signal (352) within a predefined maximum permissible time (tmax), where n is ≥ 2, in particular n is ≥ 3,
and/or the control unit (370) establishes a second condition for actual slipping of the torque coupling (251) given an n-times change between the first control signal (351) and the second control signal (352) within a predefined minimum permissible time (tmin), where n is ≥ 2, in particular n is ≥ 3.

2. Handheld power tool according to Claim 1, **characterized in that** the control unit (370) establishes actual slipping of the torque coupling (251) if either the first condition and/or the second condition for actual slipping of the torque coupling (251) are/is met.

3. Handheld power tool (100) according to either of the preceding claims, **characterized in that** the control unit (370) is configured to control, in particular to switch off, the drive motor (180) as soon as the control unit (370) establishes actual slipping of the torque coupling (251) .

4. Handheld power tool (100) according to one of the preceding claims, **characterized in that** the control unit (370) is configured to determine the minimum permissible time (tmin) or the maximum permissible time (tmax) depending on a motor rotation speed.

5. Handheld power tool (100) according to Claim 4, **characterized in that** a linear relationship between the motor rotation speed and the minimum permissible time (tmin) or the maximum permissible time (tmax) is used as a basis.

6. Handheld power tool (100) according to Claim 4, **characterized in that** a non-linear relationship between the motor rotation speed and the minimum permissible time (tmin) or the maximum permissible time (tmax) is used as a basis.

7. Handheld power tool (100) according to one of the preceding claims, **characterized in that** the maximum permissible time (tmax) is determined in accordance with the following formula tmax = a*6*I_Rast_speed*x/n_motor; where a = number of latching operations until the drive motor is controlled, in particular switched off; I_Rast_Speed = transmission ratio of the drive motor (180) with a blocked drive shaft (120); and x = transmission gear.

8. Handheld power tool (100) according to one of the preceding claims, **characterized in that** the control unit (370) comprises a timer, wherein the timer emits a start signal and starts a time measurement in the event of a first signal change (341), and wherein the control unit (370) aborts the time measurement if two further signal changes (342, 343) are not detected within the maximum permissible time (tmax).

9. Handheld power tool (100) according to Claim 8, **characterized in that** the timer starts a new time measurement with each signal change (341, 342, 343), wherein the control unit (370) monitors each time measurement separately in respect of whether two further signal changes take place within the respectively maximum permissible time (tmax).

10. Handheld power tool (100) according to one of the preceding claims, **characterized in that** the handheld power tool (100) comprises a further sensor (310) for detecting a transmission gear (x).

11. Handheld power tool (100) according to Claim 10, **characterized in that** the control unit (370) is configured to determine the minimum permissible time (tmin) or the maximum permissible time (tmax) depending on the motor rotation speed (n) and the transmission gear (x) .

12. Handheld power tool (100) according to Claim 10 or 11, **characterized in that** defined values for the minimum permissible time (tmin) or the maximum permissible time (tmax) depending on the motor rotation speed (n) and the transmission gear (x) are stored in the control unit (370) .

## Revendications

1. Machine-outil portative (100) comportant un embrayage de couple (251) ainsi qu'une transmission (170) servant à la transmission d'un couple produit par un moteur d'entraînement (180) à un arbre d'entraînement (120) ; l'embrayage de couple (251) étant construit de telle sorte qu'un composant d'embrayage (230) parcourt une course de déplacement en cas de débrayage de l'embrayage de couple (251) ;
une unité de commande (370) et un capteur (310), le capteur (310) surveillant un déplacement du composant d'embrayage (230) et envoyant des signaux de capteur correspondants à l'unité de commande (370) ; l'unité de commande (370) étant conçue pour commander le moteur d'entraînement (180) en fonction des signaux de capteur reçus ;
l'unité de commande (370) étant en outre conçue pour soumettre les signaux de capteur reçus à un contrôle de plausibilité afin de déterminer si un débrayage effectif de l'embrayage de couple (251) est présent ;
**caractérisée en ce que**
l'unité de commande (370) associe aux signaux de capteur un premier signal de commande (351), lequel représente une absence de mouvement du composant d'embrayage (230), ou un deuxième signal de commande (352), lequel représente un mouvement du composant d'embrayage (230) ; l'unité de commande (370) étant configuré de telle sorte qu'en cas de n^{ième} changement entre le premier signal de commande (351) et le deuxième signal de commande (352) pendant une durée (tmax) admissible maximale définie préalablement, elle détermine une première condition pour un débrayage effectif de l'embrayage de couple (251), où n ≥ 2, en particulier n ≥ 3,
et/ou l'unité de commande (370), en cas de n^{ième} changement entre le premier signal de commande (351) et le deuxième signal de commande (352) pendant une durée (tmin) admissible minimale définie préalablement, déterminant une deuxième condition pour un débrayage effectif de l'embrayage de couple (251), où n ≥ 2, en particulier n ≥ 3.

2. Machine-outil portative (100) selon la revendication 1, **caractérisée en ce que** l'unité de commande (370) détermine un débrayage effectif de l'embrayage de couple (251) si la première condition et/ou la deuxième condition pour un débrayage effectif de l'embrayage de couple (251) sont remplies.

3. Machine-outil portative (100) selon l'une des revendications précédentes, **caractérisée en ce que** l'unité de commande (370) est configurée pour commander, en particulier pour couper, le moteur d'entraînement (180) dès que l'unité de commande (370) détermine un débrayage effectif de l'embrayage de couple (251).

4. Machine-outil portative (100) selon l'une des revendications précédentes, **caractérisée en ce que** l'unité de commande (370) est configurée pour déterminer la durée admissible minimale (tmin) ou la durée admissible maximale (tmax) en fonction d'un régime de moteur.

5. Machine-outil portative (100) selon la revendication 4, **caractérisée en ce qu'**une relation linéaire entre le régime de moteur et la durée admissible minimale (tmin) ou la durée admissible maximale (tmax) est prise pour base.

6. Machine-outil portative (100) selon la revendication 4, **caractérisée en ce qu'**une relation non linéaire entre le régime de moteur et la durée admissible minimale (tmin) ou la durée admissible maximale (tmax) est prise pour base.

7. Machine-outil portative (100) selon l'une des revendications précédentes, **caractérisée en ce que** la durée admissible maximale (tmax) est déterminée selon la formule suivante tmax = a*6I_Rast_speedx/n_motor ; où a = nombre de crans d'arrêt jusqu'à la commande, en particulier la coupure, du moteur d'entraînement ; I_Rast_Speed = rapport de multiplication du moteur d'entraînement (180) en cas d'arbre d'entraînement (120) bloqué ; et x = rapport de transmission (170).

8. Machine-outil portative (100) selon l'une des revendications précédentes, **caractérisée en ce que** l'unité de commande (370) comporte un temporisateur, le temporisateur, en cas de premier changement de signal (341), émettant un signal de départ et démarrant une mesure de temps, et l'unité de commande (370) interrompant la mesure de temps si deux autres changements de signal (342, 343) ne sont pas détectés pendant la durée admissible maximale (tmax).

9. Machine-outil portative (100) selon la revendication 8, **caractérisée en ce que** le temporisateur démarre une nouvelle mesure de temps à chaque changement de signal (341, 342, 343), l'unité de commande (370) surveillant séparément après cela si deux autres changements de signal ont lieu pendant la durée admissible maximale (tmax) respective.

10. Machine-outil portative (100) selon l'une des revendications précédentes, **caractérisée en ce que** la machine-outil portative (100) comporte un autre capteur (310) pour la détection d'un rapport de transmission (x).

11. Machine-outil portative (100) selon la revendication 10, **caractérisée en ce que** l'unité de commande (370) est configurée pour déterminer la durée admissible minimale (tmin) ou la durée admissible maximale (tmax) en fonction du régime de moteur (n) et du rapport de transmission (x).

12. Machine-outil portative (100) selon la revendication 10 ou 11, **caractérisée en ce que** des valeurs déterminées pour la durée admissible minimale (tmin) ou la durée admissible maximale (tmax) en fonction du régime de moteur (n) et du rapport de transmission (x) sont enregistrées dans l'unité de commande (370).
